# EUROPEAN PATENT APPLICATION

(11) **EP 1 087 599 A2**
(43) Date of publication of application: **28.03.2001**
(21) Application number: 00307832.6
(22) Date of filing: 11.09.2000
(51) Int. Cl.: H04M 3/54, H04M 7/00

(54) **Intelligent-networked telephone system with service for providing call forwarding options to a party calling a subscriber**

(30) Priority: 23.09.1999 US 404529
(71) Applicant: LUCENT TECHNOLOGIES INC., Murray Hill, New Jersey 07974-0636 (US)
(72) Inventor: Hua, Shiyan, Wheaton, Illinois 60187 (US); Cai, Yigang, Naperville, Illinois 60565 (US); Polsley, Patricia Diane, Warrenville, Illinois 60555 (US)
(74) Representative: Buckley, Christopher Simon Thirsk

(57) **Abstract**

An intelligent-networked telecommunication system and method allows a party calling a subscriber to the present-inventive Optional Call Forwarding (OCF) service to choose among different call forwarding options. If a call to a subscriber with the OCF service enabled is not answered within a predetermined time period, the calling party receives an announcement with a call forwarding menu. After the calling party makes a choice the call is routed to the chosen number. The present invention also allows the subscriber to provide a calling party with different call forwarding menus according to the calling party's telephone number. For example, if the calling party number is among specified numbers on a list, the calling party may have the option of forwarding a call to the home number of the called party (while callers not on the list can only forward the call to another business extension). As another example, calling parties can be given a menu with forwarding numbers with similar geographic characteristics to the calling number.

## Description

### Field Of The Invention

The present invention generally relates to networks for providing telephone services. More particularly, the present invention relates to improvements in the handling of unanswered telephone calls.

### Background

The use of call forwarding service is well-known in public switched telephone systems. In its most basic form, a telephone customer can enter a code from a telephone, followed by a number to which all calls destined for the telephone number of the attached line will be forwarded. This allows the customer to avoid missing calls due to absence and the like, and to receive the calls at a number different from the number dialed by the calling party.

In places of business, for example, calls destined for a particular number or extension can be forwarded to other extensions when an employee is busy or absent from the office. These other extensions include voice mail, the extension of another employee who may be able to help the calling party, and temporary extensions of the party the calling party intends to reach.

Intelligent Networks (INs) are software and hardware hybrids which can be used to automatically process telephone calls in a telephone system. Besides routinely routing calls from a calling party to a called party/destination number, and handling various enhanced services, INs could also be used to implement call forwarding service.

A service control point (SCP) in the IN provides the logic that governs call-handling, etc., and contains a database that stores useful information needed for various transactions. The IN also contains several switches for both receiving calls to the network and physically routing calls to destination numbers. Each switch contains a Service Switching Point (SSP) for interfacing with calling parties and performing the actual call routing under the instruction of the SCP. The SCP and SSP may be connected with a high-speed link utilizing, for example, the Intelligent Network Application Protocol (INAP), as approved by the European Telecommunications Standards Institute (ETSI) or International Telecommunication Unit (ITU).

As was stated *supra*., prior art call forwarding services of public switched telephone systems allow a service subscriber the flexibility of forwarding telephone calls intended for his/her number to a variety of other numbers, including voice mail, temporary numbers and the numbers of third parties who may answer calls in place of the subscriber. In contrast to the many options available for a call forwarding service subscriber, a calling party has calls forwarded on a take-it-or-leave-it basis. That is, when a destination is not answered, the calling party can only be forwarded in the exact manner determined by the subscriber-callee.

It would be extremely useful to harness the versatility of an IN to give parties calling unanswered telephone numbers options regarding where their call is forwarded.

### Summary Of The Invention

In view of the aforementioned problem and deficiencies of the prior art, the present invention provides a public switched telephone system for processing telephone calls, including call forwarding. The system at least includes a plurality of input telephonic devices operatively coupled to an origination telephone line for initiating telephone calls, and an automated intelligent network (IN) coupled to origination telephone lines adapted to process telephone calls, the IN at least including a service control point (SCP), and the SCP at least including an SCP control unit and an SCP database coupled to the SCP control unit, the IN being adapted to authorize the routing of telephone calls. The system further includes at least one switch operatively coupled to the origination telephone line and to the SCP, the switch adapted to route calls authorized by the SCP to a destination number specified by a calling party, and an announcement device coupled to the SCP, and adapted to, upon being triggered by the SCP, playing an announcement message including a menu for forwarding a call to one of a plurality of telephone numbers at the direction of a calling party. The SCP is adapted to store at least a call forwarding menu capable of being announced by the announcement device, and the SCP directs the SSP to route a call according to the call forwarding number chosen by a calling party.

The present invention also provides, in a public switched telephone system, a method for processing telephone calls including call forwarding. The method at least includes the steps of providing a plurality of input telephonic devices operatively coupled to an origination telephone line for initiating telephone calls, and providing an automated intelligent network (IN) coupled to origination telephone lines for processing telephone calls, the IN at least including a service control point (SCP), and the SCP at least including an SCP control unit and an SCP database coupled to the SCP control unit, the IN being adapted to authorize the routing of telephone calls. The method also includes the steps of, via at least one switch operatively coupled to the origination telephone line and to the SCP, routing calls authorized by the SCP to a destination number specified by a calling party. Via an announcement device coupled to the SCP, and upon being triggered by the SCP, the method further includes the steps of playing an announcement message including a menu for forwarding a call to one of a plurality of telephone numbers at the direction of a calling party, via the SCP, storing at least a call forwarding menu capable of being announced by the announcement device, and via the SCP, directing the SSP to route a call according to the call forwarding number chosen by a calling party.

### Brief Description Of The Drawing Figures

Features and advantages of the present invention will become apparent to those skilled in the art from the description below, with reference to the following drawing figures, in which:
Figure 1 is a schematic block diagram of the basic hardware for the present-inventive, intelligent-networked telecommunication system having Optional Call Forwarding (OCF) service; and
Figure 2 is a flowchart/algorithm detailing the call flow of the OCF service.

### Description Of The Preferred Embodiments

### 1. General Description

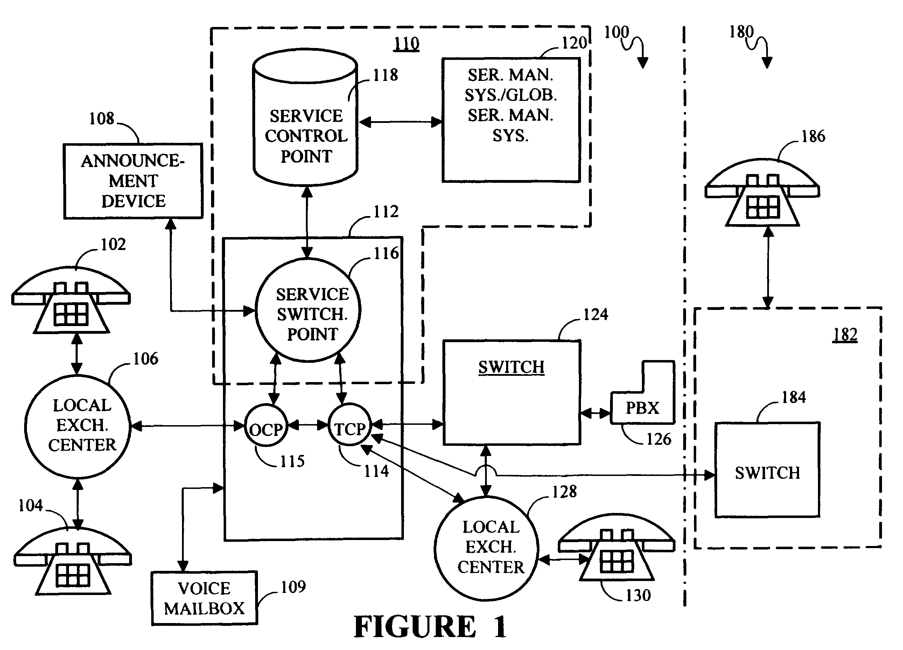

The basic hardware of the telephone service system 100/180 capable of implementing OCF service is illustrated in Figure 1.

The system 100/180 combines a domestic network 100, as in the United States, for example, and a foreign network 180, as in Europe, for example. The system 100/180 includes a variety of telephonic input devices as would be common in a general telephone system. For example, a user can connect to the network 100 using such devices as common telephones 102 and 104. As an example, a user can attempt to complete a telephone call using a telephone which is part of a private branch exchange (PBX) 126 as is known in the art. The telephones include alphanumeric keypads for inputting Dual-Tone-Multi-Frequency (DTMF) signals, or the like, as is common.

An Originating Call Processor (OCP) 115 within the switch 112 (184 in the case of the foreign network 180) transfers the call to a service switching point (SSP) 116. The SSP is part of an intelligent network (IN) 110 (182 in the case of the foreign network 180), capable of automated processing of telephone calls. A Terminating Call Processor (TCP) 114 handles the termination of call processing to connect it to the destination number.

The SSP 116 is linked to a service control point (SCP) 118. The SCP 118 performs service logic and provides the SSP 116 with call handling instructions, as provisioned by the system. It will be appreciated by those skilled in the art that the SCP 118 can be implemented as a networked database, not limited to one geographic location.

A switch 124 that may include an SSP will route an approved telephone call to its final destination as mentioned above.

An announcement device 108 is linked to the switch to play announcements to a calling party with a menu for call forwarding options, as will be detailed *infra*. As is common in present-day telephone systems, a voice mailbox 109 allows the calling party of unanswered terminated calls to leave a voice mail message for the called party.

The interface between the SSP 116 and the SCP 118 uses the ETSI/INAP or ITU/INAP protocol for speed and compatibility. The interface between the SSP 116 and the OCP 115, and the interface between the SSP and TCP use a switch internal message flow, or a common channel signaling link or any type of protocols, as will be appreciated by those skilled in the art.

### 2. OCF Service Operation

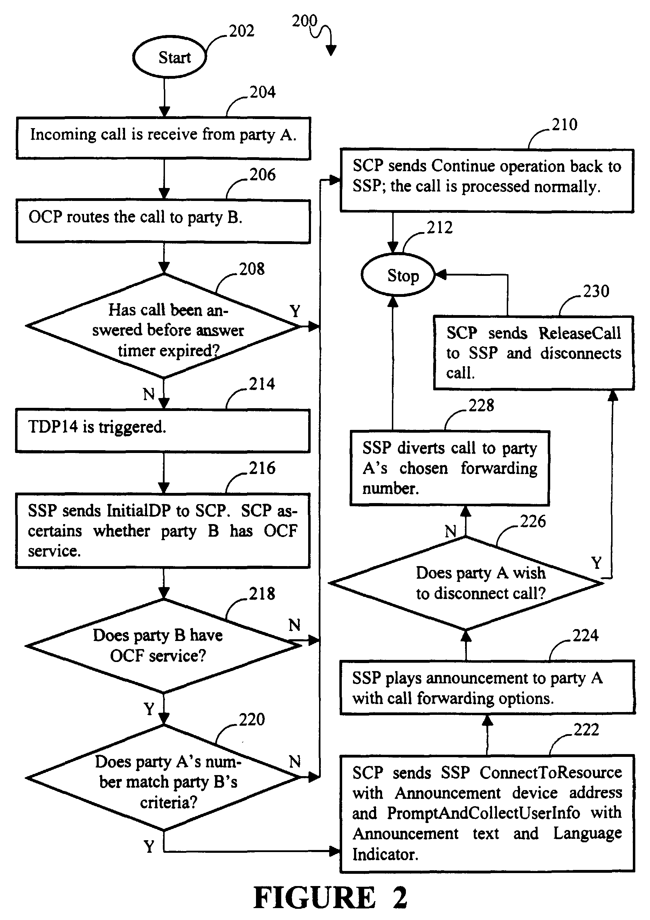

The OCF service of the present invention will be described with reference to the block diagram in Figure 1 and the algorithm 200 in Figure 2. Briefly described, when the system receives a call from a calling party and it has not been answered within a predetermined time, the system determines whether the called party has OCF service. If so, the system determines which menu if any is indicated for announcement to the calling party based upon the calling party number and stored calling party match information. The calling party can then select from among multiple call forwarding options that will be executed by the system. In addition to storing the calling party match information, the SCP also stores the text of the announcement message and the language in which the announcement message will be played.

After the start 202 of the algorithm, a switch (e.g., 112, 124, 184, etc.) receives an incoming call from a calling party ("party A") in Step 204. A switch OCP attempts to route the call to the called party ("party B") and starts an answer timer residing in the SCP. The answer timer can count in either time or the number of ring signals sent to the called number.

If the call is answered before the answer timer expires (see Step 208) the SCP sends a Continue operation to the switch SSP and the call is processed normally (Steps 210 and 212). If the call is not answered before the answer timer expires (see Step 208) a termination detection point (TDP14) is activated in Step 214. A switch SSP sends an InitialDP operation to the SCP with information such as the calling line identification of the calling party (OriginalCalledPartyID), the destination number, and others.

In Step 218, the SCP determines whether the called party has OCF service. This can be ascertained by checking the value of a digit in a stored customer profile. If the called party has not subscribed to OCF service, the call is processed normally in Steps 210 and Step 212. In the preferred embodiment OCF service of a subscribing customer can be activated and deactivated at will by the subscriber entering a code from an alphanumeric keypad.

When the called party has subscribed to and has activated OCF service, the algorithm proceeds to Step 220. In that step, the SCP determines whether the calling party information matches the information stored by the subscriber. For example, the subscriber might store a list of calling numbers from which a calling party may access an optional call forwarding menu. A calling party from any calling party number not matching one listed would not have access to an OCF menu. A subscriber may also store several menus along with calling party number characteristics corresponding to each. For example, a caller from a first country might receive a first menu, while a caller from a second country might receive a second menu, and so on. Given the description of the present invention, it will be appreciated by those skilled in the art that many variations exist for allowing a subscriber to store different call forwarding menus for different calling party numbers.

If the calling party number does not match any of the stored criteria, the call is processed normally (without call forwarding) in Step 210. In this iterative method, an unanswered call without active OCF will simply continue to ring until the calling party "hangs up." However, if the calling party number matches stored criteria, the SCP sends a ConnectToResource operation to the SSP with the address of an announcement device to be used, and a PromptAndCollectUserInfo operation with both the text of the appropriate menu and the language in which it will be played (Step 222).

In Step 224, the SSP plays the announcement message to the calling party with the appropriate call forwarding menu. Among the choices on the menus is the ability of the calling party to disconnect the call. If the calling party chooses to disconnect the call, the SCP sends a ReleaseCall operation to the SSP, and the SSP disconnects the call (Steps 226 and 230). If the calling party does not choose to disconnect the call, but instead makes another choice from the menu, the call is forwarded to the chosen number for normal processing (Steps 226, 228 and 212).

Variations and modifications of the present invention are possible, given the above description. However, all variations and modifications which are obvious to those skilled in the art to which the present invention pertains are considered to be within the scope of the protection granted by this Letters Patent.

## Claims

1. A public switched telephone system for processing telephone calls, including call forwarding, comprising:
a plurality of input telephonic devices operatively coupled to an origination telephone line for initiating telephone calls;
an automated intelligent network (IN) coupled to origination telephone lines adapted to process telephone calls, said IN comprising a service control point (SCP), and said SCP comprising an SCP control unit and an SCP database coupled to said SCP control unit, said IN being adapted to authorize the routing of telephone calls;
at least one switch operatively coupled to said origination telephone line and to said SCP, said switch adapted to route calls authorized by said SCP to a destination number specified by a calling party; and
an announcement device coupled to said SCP, and adapted to, upon being triggered by said SCP, playing an announcement message including a menu for forwarding a call to one of a plurality of telephone numbers at the direction of a calling party;
wherein said SCP is adapted to store at least a call forwarding menu capable of being announced by said announcement device, and said SCP directs said SSP to route a call according to the call forwarding number chosen by a calling party.

2. The system in Claim 1 wherein said SCP is further adapted to store a calling party check information for comparison with the calling party number information, and wherein the call forwarding menu presented to a calling party depends upon the calling party number.

3. The system in Claim 1 wherein said SCP is further adapted to store an announcement message language indicator for indicating to the announcement device, a language of an announcement message chosen by a subscriber.

4. In a public switched telephone system, a method for processing telephone calls including call forwarding, comprising the steps of:
providing a plurality of input telephonic devices operatively coupled to an origination telephone line for initiating telephone calls;
providing an automated intelligent network (IN) coupled to origination telephone lines for processing telephone calls, said IN comprising a service control point (SCP), and said SCP comprising an SCP control unit and an SCP database coupled to said SCP control unit, said IN being adapted to authorize the routing of telephone calls;
via at least one switch operatively coupled to said origination telephone line and to said SCP, routing calls authorized by said SCP to a destination number specified by a calling party;
via an announcement device coupled to said SCP, and upon being triggered by said SCP, playing an announcement message including a menu for forwarding a call to one of a plurality of telephone numbers at the direction of a calling party;
via said SCP, storing at least a call forwarding menu capable of being announced by said announcement device; and
via said SCP directing said SSP to route a call according to the call forwarding number chosen by a calling party.

5. The method in Claim 1 further comprising the steps of:
via said SCP, storing calling party check information for comparison with the calling party number information; and
presenting a call forwarding menu to a calling party depending upon the calling party number.

6. The method in Claim 1 further comprising the step of, via said SCP, storing an announcement message language indicator for indicating to the announcement device, a language of an announcement message chosen by a subscriber.

7. The method in Claim 4 further comprising the step of carrying out said playing out an announcement message step upon the expiration of a predefined answer timer interval, said answer timer interval beginning after said SSP attempts termination to a destination of a subscriber an optional call forwarding service subsuming the method in Claim 4.
